# EUROPEAN PATENT SPECIFICATION

(11) **EP 2 106 079 B1**
(45) Date of publication and mention of the grant of the patent: **05.12.2012**
(21) Application number: 08706575.1
(22) Date of filing: 28.01.2008
(51) Int. Cl.: H04L 12/66, H04L 29/08, H04L 12/28, H04L 29/12

(54) **SYSTEM, DEVICE AND METHOD FOR AUTO-CONFIGURING APPLICATION TERMINALS IN HOME NETWORK**
SYSTEM, VORRICHTUNG UND VERFAHREN ZUR AUTOMATISCHEN KONFIGURATION VON ANWENDUNGSENDGERÄTEN IN EINEM HEIMNETZWERK
SYSTÈME, DISPOSITIF ET PROCÉDÉ DE CONFIGURATION AUTOMATIQUE DE TERMINAUX D'APPLICATION DANS UN RÉSEAU DOMESTIQUE

(30) Priority: 16.02.2007 CN 200710079297
(43) Date of publication of application: 30.09.2009
(73) Proprietor: Huawei Technologies Co., Ltd., Longgang District, Shenzhen Guangdong 518129 (CN)
(72) Inventor: DING, Zhiming, Shenzhen Guangdong 518129 (CN); WU, Huangwei, Shenzhen Guangdong 518129 (CN)
(74) Representative: Thun, Clemens
(86) International application number: PCT/CN2008/070198
(87) International publication number: WO 2008/101421

(56) References cited:
- CN-A- 1 168 509
- CN-A- 1 425 246
- CN-A- 1 450 766
- CN-A- 1 713 629
- CN-A- 101 043 532
- US-B1- 7 099 285
- US-B1- 7 099 338
- BROADBAND FORUM: "TR-069 CPE WAN Management Protocol v1.1 Issue 1 Amentment 1" BROADBAND FORUM TECHNICAL REPORT,, no. ISSUE 1 AMENDMENT 1, 30 November 2006 (2006-11-30), pages 1-138, XP002550467
- DROMS BUCKNELL UNIVERSITY R: "Dynamic Host Configuration Protocol; rfc2131.txt" IETF STANDARD, INTERNET ENGINEERING TASK FORCE, IETF, CH, 1 March 1997 (1997-03-01) , XP015007915 ISSN: 0000-0003

## Description

### Field of the Invention

The present invention relates to the network communication field, and in particular, to a system, apparatus, and method for automatically configuring application terminals in a home network.

### Background of the Invention

At present, IP-based applications such as Internet Protocol Television (IPTV) and Voice over IP (VoIP) are fast developing and will gradually replace dedicated network applications such as cable TV and Public Switched Telephone Network (PSTN) phone. IP application terminals can support IP-based applications only after being configured. For example, the IP address or Universal Resource Locator (URL) of the application server and the protocol used should be configured. On the one hand, the cost for operators/service providers (SPs) to manually configure each IP application terminal is high. On the other hand, it is unreasonable to let users configure IP application terminals. Therefore, it is urgent to implement automatic configuration of IP application terminals.

In the prior art, the Customer Premises Equipment (CPE), such as the home gateway, is used to send a Dynamic Host Configuration Protocol (DHCP) Request message that carries the device identifier in a DHCP option to the DHCP server of an operator. The DHCP server finds the URL of the Automatic Configuration Server (ACS) of the CPE according to the device identifier and then sends a DHCP ACK message that carries the URL of the ACS in a DHCP option to the CPE. In this way, the CPE obtains the URL information of the ACS. In addition, the CPE customized by an operator can be pre-configured with the URL of the operator's ACS before delivery. The CPE accesses the ACS according to the URL of the ACS to obtain the corresponding configuration file. Then the CPE is configured automatically according to the configuration file.

DHCP uses plain texts. Therefore, the URL of the ACS may be easily intercepted when being obtained through DHCP, thus affecting subsequent automatic configuration. Therefore, it is not recommended that the CPE should obtain the URL of the ACS through DHCP. Before a method for obtaining the URL of the ACS securely is available, it is recommended to pre-configure the URL of the ACS for the device before delivery or to manually configure the URL of the ACS. This, however, affects the retail of the CPE.

In actual applications, the CPE can obtain the URL of the ACS through the Point-to-Point Protocol over Ethernet (PPPoE) instead of through DHCP. When PPPoE is used, however, proper regulations need to be made.

The application terminals connected to the home gateway can also use the preceding technical solution to implement automatic configuration. For example, an application terminal sends a DHCP Request message or a PPPoE Request message to the home gateway to obtain the URL of the Terminal Automatic Configuration Server (TACS) from the DHCP server or the PPPoE server through the DHCP Proxy or DHCP Relay function of the home gateway or through the transparent transmission capability of the home gateway. After receiving the URL of the TACS, the home gateway sends it to the application terminal in the same way.

When implementing the present invention, the inventor finds that it is insecure to use DHCP to automatically configure application terminals in the existing technical solution because DHCP uses plain texts. Using PPPoE to automatically configure application terminals may increase the complexity of the application terminal software because PPPoE supports identity authentication.
BROADBAND FORUM: "TR-069 CPE WAN Management Protocol v1.1 Issue 1 Amendment 1" BROADBAND FORUM TECHNICAL REPORT, no. ISSUE 1 AMENDMENT 1, 30 November 2006 discloses a protocol for communication between a CPE and Auto-Configuration Server (ACS) that encompasses secure auto-configuration as well as other CPE management functions within a common framework.
DROMS BUCKNEL UNIVERSITY R: "Dynamic Host Configuration Protocol; rfc2131.txt" IETF STANDARD, INTERNET ENGINERRING TASK FORCE, IETF, CH, 1 March 1997 provides a framework for passing configuration information to hosts on a TCPIP network. DHCP is based on the Bootstrap Protocol (BOOTP), adding the capability of automatic allocation of reusable network addresses and additional configuration options. DHCP captures the behavior of BOOTP relay agents, and DHCP participants can interoperate with BOOTP participants.
US 7099338 B1 discloses a system and method for ensuring a connection to a configuration server by customer premises equipment. The customer premises equipment is connected to a data network via a network connection. The data network includes a connection to the data network. A temporary configuration server is included to respond to configuration messages from the customer premises equipment before the network connection is capable of sending messages over the data network.

### Summary of the Invention

Embodiments of the present invention provide a system, apparatus, and method for automatically configuring application terminals in a home network to ensure that application terminals can securely obtain the URL of an ACS from a public network without increasing the complexity of the application terminal software. Thus, the application terminals in the home network can be automatically and securely configured.

The objective of the present invention is achieved through the following technical solution:

An embodiment of the present invention provides a system for automatically configuring application terminals in a home network. The system includes an application terminal, a home gateway, and a Gateway Automatic Configuration Server (GACS).

The application terminal is adapted to: obtain address information of the GACS through the home gateway, send a configuration request message to the GACS, obtain address information of a TACS, send the configuration request message to the TACS, and obtain configuration information from the TACS for automatic configuration.

The home gateway is adapted to: receive a DHCP Request message or a DHCP Inform message sent from the application terminal and send the address information of the GACS to the application terminal through a DHCP ACK message.

The GACS is adapted to: receive the configuration request message sent from the application terminal, obtain the address information of the TACS according to the configuration request message, and send the obtained address information of the TACS to the application terminal.

An embodiment of the present invention provides a method for automatically configuring application terminals in a home network. The method includes:

exchanging information by an application terminal with a home gateway to obtain address information of a GACS and sending by the application terminal a configuration request message to the GACS; and

obtaining by the application terminal returned address information of a TACS from the GACS, sending by the application terminal the configuration request message to the TACS according to the obtained address information of the TACS, and obtaining by the application terminal configuration information from the TACS for automatic configuration.

In the technical solution provided in the preceding embodiments of the present invention, an application terminal obtains the URL of an ACS from a GACS. This ensures that the application terminal can securely obtain the URL of the ACS without increasing the complexity of the application terminal and avoids insecurity when the application terminal directly obtains the URL of the ACS from a public network.

### Brief Description of the Drawings

FIG. 1 shows the networking of a system for automatically configuring application terminals in a home network in an embodiment of the present invention;

FIG. 2 shows a specific structure of a system for automatically configuring application terminals in a home network in an embodiment of the present invention; and

FIG. 3 shows a flowchart of a method for automatically configuring application terminals in a home network in an embodiment of the present invention.

### Detailed Description of the Invention

Embodiments of the present invention provide a system, apparatus, and method for automatically configuring application terminals in a home network. For easy understanding, the following describes the system, apparatus, and method for automatically configuring application terminals in the home network in the embodiments of the present invention in detail with reference to the accompanying drawings.

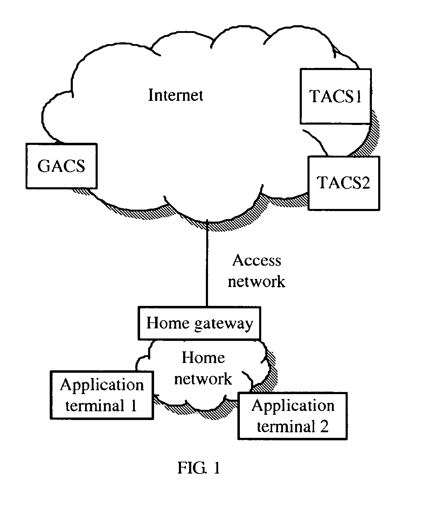

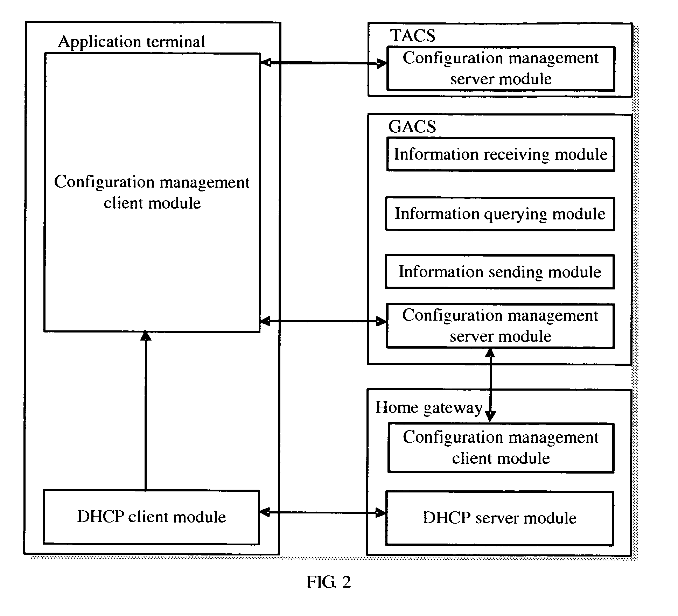

FIG. 1 shows the network of a system for automatically configuring application terminals in a home network in an embodiment of the present invention. As shown in FIG. 2, the system includes a GACS, a TACS, a home gateway, and an application terminal. To describe the embodiment clearer in FIG.2, the system includes only one application terminal, and it is apparent that those skilled in the art may realize the embodiment with more application terminals.

The ACS automatically configures and manages its terminal devices according to a management protocol (such as TR069). Network operators and SPs may both deploy ACSs to automatically configure and manage the terminal devices within the management scopes of the ACSs.

The following takes the Customer Premises Equipment WAN Management Protocol (CWMP) (also referred to as TR069) for communication between a CPE and an ACS as an example to describe the functions of various modules in the system provided in an embodiment of the present invention.

The GACS is deployed by a network service provider (NSP) or an Internet service provider (ISP), and adapted to automatically configure and manage the home gateways of the NSP/ISP. In embodiments of the present invention, the GACS may also exchange messages with an application terminal through CWMP to send the URL of the TACS to the application terminal. Therefore, in addition to the modules that provide the configuration and management functions of the ACS, the GACS includes an information receiving module, an information querying module, and an information sending module.

The information receiving module is adapted to receive a configuration request message defined in TR069 from an application terminal. The configuration request message carries device identifier information.

The information querying module is adapted to query a locally stored table or the business support system (BSS)/operation support system (OSS) for relevant TACS information according to the device identifier information in the configuration request message.

The information sending module is adapted to obtain the URL information of the TACS and send the URL information to the application terminal through a configuration response message.

As defined in TR069, a device such as an application terminal in embodiments of the present invention should send an Inform message to the ACS if the device obtains the URL of the ACS after being started. The Inform message carries relevant information such as the device identifier. To obtain the configuration, the device needs to send a BOOTSTRAP event to the ACS through the Inform message. After receiving the BOOTSTRAP event, the ACS sends a Download message to the device to notify the device to obtain the configuration file. The Inform message carrying the BOOTSTRAP event can also be called a configuration request message.

If the received Inform message carries the BOOTSTRAP event, the GACS obtains the device identifier information from the Inform message and determines whether the device is a home gateway according to the device type information in the device identifier. If the device is not a home gateway, the GACS queries the database of the GACS or the BSS/OSS for the URL information of the TACS according to the device identifier information and sends the obtained URL information to the application terminal by using the SetParameterValues method.

The preceding Inform message, BOOTSTRAP event, and SetParameterValues method are defined in TR069. Their definitions may be different in other management protocols and the corresponding interaction processes may also be different. For example, as defined in TR069, after receiving an Inform message, the ACS should first return an InformResponse message and then operate on the terminal device by using the SetParameterValues method. The interaction mode may not be used in other management protocols. For example, the ACS directly carries the URL of the TACS in a message similar to the InformResponse message and does not need to send another message.

The TACS is deployed by an SP and adapted to automatically configure and manage the application terminals within its management scope through CWMP. One TACS can configure and manage several application terminals. After receiving a configuration request message sent through CWMP from an application terminal, the TACS returns corresponding configuration file information to the application terminal through CWMP.

The application terminal is adapted to exchange messages with the GACS through CWMP to obtain the URL information of the TACS according to the received URL information of the GACS from the home gateway. After that, the application terminal obtains the configuration file information from the TACS through CWMP according to the URL information of the TACS and uses the configuration file information for automatic configuration.

Specifically, the application terminal may include a DHCP client module and a configuration management client module.

The DHCP client module is adapted to obtain the IP address of the DHCP server from the network through DHCP and parse the URL of the ACS from the option in the DHCP ACK message sent from the home gateway. The application terminal interacts with the home gateway within the home network. Therefore, this process is regarded as secure.

The configuration management client module is adapted to interact with the ACS through CWMP. As defined in TR069, if the ACS changes the URL of the ACS of a terminal device, the terminal device should send an Inform message to the new ACS and be managed by the new ACS. With this mechanism, the application terminal first accesses the GACS obtained from the home gateway through DHCP. When the application terminal uses CWMP to interact with the GACS, the GACS sends the URL of the TACS to the application terminal. As a result, the application terminal obtains the URL of its own ACS. CWMP is based on the secure socket layer (SSL) protocol. Therefore, this process is secure.

The home gateway is adapted to allocate an IP address to the application terminal after receiving a DHCP Request message sent from the application terminal and carry the URL of the GACS in an option in a DHCP ACK message. The home gateway may obtain the URL of the GACS by using a secure method such as PPPoE, pre-configuration before delivery, or manual configuration by operators or users. According to the obtained URL of the GACS, the home gateway obtains the configuration from the GACS. In addition to the configuration management client module of the ACS, the home gateway includes a DHCP server module.

The DHCP server module is adapted to send the address information of the GACS to the application terminal through a DHCP ACK message after receiving a DHCP Request message or a DHCP Inform message sent from the application terminal.

Although TR069 defines the method for obtaining the URL of an ACS from the DHCP server through DHCP, the DHCP server that allocates an IP address to a home gateway is in the public network and thus it is insecure to obtain the URL of the ACS through DHCP. Therefore, the home gateway obtains the URL of the ACS by using other methods such as PPPoE, pre-configuration before delivery, and manual configuration by operators or users.

As shown in FIG. 1, TACS1 belongs to SP1 and automatically configures and manages the application terminals that use the services provided by SP1. One home network may include several application terminals that use the services provided by SP1. TACS2 belongs to SP2 and automatically configures and manages the application terminals that use the services provided by SP2. One home network may include several application terminals that use the services provided by SP2.

SP1 and SP2 may provide the same services. For example, SP1 and SP2 both provide VoIP services. SP1 and SP2 may also provide different services. For example, SP1 provides VoIP services and SP2 provides IPTV services. Therefore, application terminals 1 and 2 may be devices of the same type or devices of different types. In addition, one SP may provide several services. For example, the SP may provide VoIP and IPTV services at the same time.

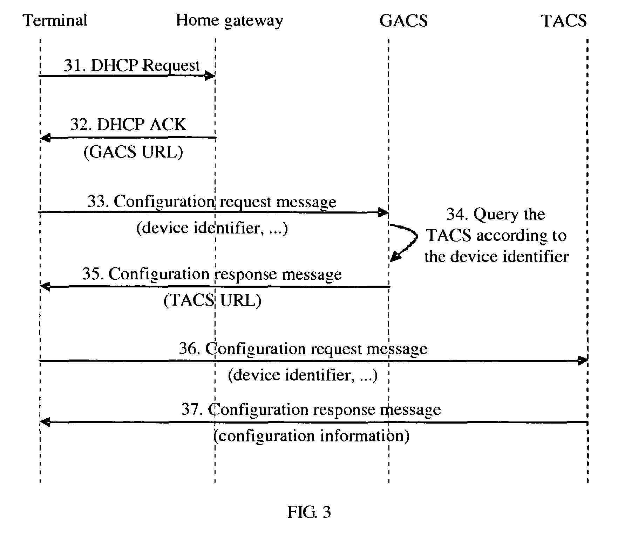

FIG. 3 shows a flowchart of a method for automatically configuring application terminals in a home network in an embodiment of the present invention. Suppose TR069 is used. The method may include the following steps:

Step 31: An application terminal uses DHCP to send a DHCP Request message to a home gateway to obtain its own IP address.

The devices in a home network may support different management specifications. For example, some support TR069 but others do not. To obtain the required information from the DHCP ACK message, the application terminal may carry certain special information in an option in the DHCP Request message. For example, in the embodiment of the present invention, the application terminal may carry the "dslforum.org" string in DHCP option 60 as required in TR069.

Step 32: After receiving the DHCP Request message, the home gateway allocates an IP address to the application terminal and adds the URL of the GACS to DHCP option 43 specified by TR069 in the DHCP ACK message.

As specified in DHCP, to obtain corresponding information from the DHCP server, the application terminal may send a DHCP Inform message to the DHCP server in step 31. Then the DHCP server returns a DHCP ACK message. This, however, affects step 32 and is not described further. Technical personnel in this field know the specific meanings and implementation methods.

Step 33: After receiving the DHCP ACK message, the application terminal obtains the URL of the GACS.

According to the obtained URL, the application terminal may use the Inform message defined in CWMP to access the GACS. The Inform message carries relevant device information such as the vendor information, device type, and device serial number. The relevant device information is called a device identifier and may identify a device uniquely. In addition, the Inform message carries the BOOTSTRAP event defined in TR069, indicating that the device needs to be configured. This message is called a configuration request message. The configuration request message is defined differently in other management protocols and the device identifier may also be different from that defined in TR069.

Step 34: After receiving the Inform message, the GACS finds that the device is not the home gateway according to the device type information in the Inform message, that is, the device is not actually managed by the GACS. In this case, according to the device identifier information, the GACS queries a locally stored table or the BSS/OSS for the URL information of the TACS.

Embodiments of the present invention require that the SP of the TACS provide relevant TACS information for the NSP/ISP of the GACS. The relevant TACS information includes the URL of the TACS and the device identifier information of the application terminal that uses the services provided by the SP, such as the vendor information, device type, and device serial number. In addition, the relevant TACS information should be stored to the GACS or the BSS/OSS of the NSP/ISP in a certain way. For example, the BSS/OSS of the NSP/ISP may provide a client for the SP. The SP loads the device identifier information of the application terminal and the URL of the TACS to the BSS/OSS system through the client. After that, the BSS/OSS transmits or does not transmit the information about the application terminal through the northbound interface of the GACS. In another way, the information about the terminals of the SP is stored only in the BSS/OSS of the SP. An interface, however, is available between the BSS/OSS of the NSP/ISP and the BSS/OSS of the SP. Through this interface, the GACS can query the URL of the TACS.

Step 35: The GACS sends the obtained URL of the TACS to the application terminal.

As specified in CWMP, the GACS may use the SetParameterValues method to change the URL of the TACS. Before using the SetParameterValues method, however, the GACS needs to return an InformResponse message to the application terminal. The SetParameterValues message that is triggered by the configuration request message sent from the application terminal and is sent out by the GACS is also a response to the configuration request message. Therefore, the differences in interactive messages defined in different protocols are also covered by the present invention.

Step 36: After receiving the URL of the new ACS from the GACS, the application terminal resends an Inform message to the new TACS.

Step 37: If the received Inform message carries the BOOTSTRAP event, the TACS uses the Download method defined in TR069 to notify the application terminal to obtain the configuration file. Thus, the application terminal obtains the corresponding configuration. Before using the Download method, the TACS needs to return an InformResponse message to the application terminal. The details about obtaining the configuration file are beyond the scope of the present invention and are not described further. If other configuration management protocols are used, however, the application terminal may obtain the configuration through a file or in another way in which the TACS gradually delivers parameter setting commands.

In the preceding steps, only one additional operation on the application terminal is required. That is, the application terminal needs to parse the URL information of the ACS from the DHCP ACK message in step 33. The subsequent steps are defined in CWMP. In addition, it is unnecessary to modify CWMP or add resources for the application terminal. In terms of the home gateway, all steps except step 32 are the same as what is specified in CWMP. In step 32, the home gateway needs to add the URL of the GACS to the option in the DHCP ACK message. The GACS needs to manage and query the TACS.

Through the preceding steps, the first step for automatically configuring the application terminal is finished within the home network. That is, the URL of the ACS is obtained within the home network. This avoids security problems in obtaining the URL of the ACS from the public network. Next, depending on the security of TR069 or other configuration management protocols, the application terminal obtains the URL of the TACS from the GACS, thus securely completing the process of automatically obtaining the TACS. Therefore, the security of the entire configuration process depends on the step for obtaining the URL of the GACS by the home gateway. In this step, the home gateway may securely obtain the URL of the GACS through PPPoE, pre-configuration before delivery, or manual setting. In a home network, only one home gateway is required but several application terminals for implementing various applications may be available.

Although the present invention has been described through exemplary embodiments, the present invention is not limited to such embodiments. It is apparent that those skilled in the art can make various modifications and variations such as replacing TR069 with SNMP V3 to the invention without departing from the scope of the invention. The invention is intended to cover the modifications and variations provided that they fall in the scope of protection defined by the claims or their equivalents.

## Claims

1. A system for automatically configuring application terminals in a home network, **characterized by** comprising an application terminal, a home gateway, and a Gateway Automatic Configuration Server (GACS), wherein:
the application terminal is adapted to: obtain address information of the GACS through the home gateway, send a configuration request message to the GACS, obtain address information of a Terminal Automatic Configuration Server (TACS), send the configuration request message to the TACS, and obtain configuration information from the TACS for automatic configuration;
the home gateway is adapted to: receive a Dynamic Host Configuration Protocol (DHCP) Request message or a DHCP Inform message sent from the application terminal and send the address information of the GACS to the application terminal through a DHCP ACK message; and
the GACS is adapted to: receive the configuration request message sent from the application terminal, obtain the address information of the TACS according to the configuration request message, and send the obtained address information of the TACS to the application terminal.

2. The system of claim 1, further comprising:
the TACS, adapted to: receive the configuration request message sent from the application terminal and configure the application terminal.

3. The system of claim 1, wherein the application terminal comprises:
a DHCP client module, adapted to: obtain an IP address of a DHCP server from a network through DHCP and parse the address information of the GACS from the DHCP ACK message sent from the home gateway.

4. The system of claim 1, wherein the GACS further comprises:
an information receiving module, adapted to receive the configuration request message sent from the application terminal, wherein the configuration request message carries device identifier information;
an information querying module, adapted to: query a locally stored table or a Business Support System or Operation Support System (BSS/OSS) for relevant TACS information according to the device identifier information carried in the configuration request message; and
an information sending module, adapted to: obtain the address information of the TACS from the information querying module and send the address information to the application terminal through a configuration response message.

5. The system of any of claim 1 to claim 4, wherein:
the configuration request message is the DHCP Inform message carrying a BOOTSTRAP event; and
the configuration response message is a DHCP ACK message and the DHCP ACK message is a SetParameterValues message.

6. A method for automatically configuring application terminals in a home network, **characterized by** comprising:
exchanging information by an application terminal with a home gateway to obtain address information of a Gateway Automatic Configuration Server (GACS) and sending by the application terminal a configuration request message to the GACS (33); and
obtaining by the application terminal returned address information of a Terminal Automatic Configuration Server (TACS) from the GACS (35), sending by the application terminal the configuration request message to the TACS according to the obtained address information of the TACS (36), and obtaining by the application terminal configuration information from the TACS for automatic configuration (37).

7. The method of claim 6, wherein the process of exchanging information with the home gateway to obtain the address information of the GACS comprises:
sending, by the application terminal, a Dynamic Host Configuration Protocol (DHCP) Request message or a DHCP Inform message to the home gateway (31); and
sending, by the home gateway, address information of the GACS to the application terminal through a DHCP ACK message after receiving the DHCP Request message or the DHCP Inform message (32).

8. The method of claim 6, before obtaining the returned address information of the TACS from the GACS, further comprising:
after receiving the configuration request message, the gateway automatic configuration server querying for address information of the TACS (34), and sending the address information of the TACS to the application terminal (35).

9. The method of claim 8, ,after receiving the configuration request message, the gateway automatic configuration server querying for address information of the TACS, and sending the address information of the TACS to the application terminal, further comprising:
by the GACS, querying a locally stored table or a business support system or operation support system (BSS/OSS) for address information of the TACS according to device identifier information carried in the configuration request message sent from the application terminal, and sending the address information of the TACS to the application terminal through a configuration response message.

## Patentansprüche

1. System zum automatischen Konfigurieren von Anwendungsendgeräten in einem Heimnetz, **dadurch gekennzeichnet, dass** es ein Anwendungsendgerät, ein Heim-Gateway und einen Server für automatische Gateway-Konfiguration (GACS) umfasst, wobei:
das Anwendungsendgerät dafür ausgelegt ist: Adresseninformationen des GACS über das Heim-Gateway zu erhalten, eine Konfigurationsanforderungsnachricht zu dem GACS zu senden, Adresseninformationen eines Servers für automatische Endgerätkonfiguration (TACS) zu erhalten, die Konfigurationsanforderungsnachricht zu dem TACS zu senden und Konfigurationsinformationen von dem TACS für eine automatische Konfiguration zu erhalten;
das Heim-Gateway dafür ausgelegt ist: eine Anforderungsnachricht für dynamisches Host-Konfigurationsprotokoll (DHCP-Anforderungsnachricht) oder eine DHCP-Informationsnachricht, die von dem Anwendungsendgerät gesendet wird, zu empfangen und die Adresseninformationen des GACS zu dem Anwendungsendgerät mittels einer DHCP ACK-Nachricht zu senden; und
der GACS dafür ausgelegt ist: die von dem Anwendungsendgerät gesendete Konfigurationsanforderungsnachricht zu empfangen, die Adresseninformationen des TACS in Übereinstimmung mit der Konfigurationsanforderungsnachricht zu erhalten und die erhaltenen Adresseninformationen des TACS zu dem Anwendungsendgerät zu senden.

2. System nach Anspruch 1, das ferner Folgendes umfasst:
den TACS, der dafür ausgelegt ist: die von dem Anwendungsendgerät gesendete Konfigurationsanforderungsnachricht zu empfangen und das Anwendungsendgerät zu konfigurieren.

3. System nach Anspruch 1, wobei das Anwendungsendgerät Folgendes umfasst:
ein DHCP-Client-Modul, das dafür ausgelegt ist: eine IP-Adresse eines DHCP-Servers von einem Netz mittels DHCP zu erhalten und die Adresseninformationen des GACS von der DHCP ACK-Nachricht, die von dem Heim-Gateway gesendet wird, zu parsen.

4. System nach Anspruch 1, wobei der GACS ferner Folgendes umfasst:
ein Informationsempfangsmodul, das dafür ausgelegt ist, die von dem Anwendungsendgerät gesendete Konfigurationsanforderungsnachricht zu empfangen, wobei die Konfigurationsanforderungsnachricht Vorrichtungsidentifizierungsinformationen fährt;
ein Informationsabfragemodul, das dafür ausgelegt ist: eine lokal gespeicherte Tabelle oder ein Geschäftsunterstützungssystem oder Betriebsunterstützungssystem (BSS/OSS) nach relevanten TACS-Informationen in Übereinstimmung mit den in der Konfigurationsanforderungsnachricht geführten Vorrichtungsidentifizierungsinformationen abzufragen; und
ein Informationssendemodul, das dafür ausgelegt ist: die Adresseninformationen des TACS von dem Informationsabfragemodul zu erhalten und die Adresseninformationen mittels einer Konfigurationsantwortnachricht zu dem Anwendungsendgerät zu senden.

5. System nach einem der Ansprüche 1 bis 4, wobei:
die Konfigurationsanforderungsnachricht die DHCP-Informationsnachricht ist, die ein BOOTSTRAP-Ereignis führt; und
die Konfigurationsantwortnachricht eine DHCP ACK-Nachricht ist und die DHCP ACK-Nachricht eine Einstellparameterwerte-Nachricht ist.

6. Verfahren zum automatischen Konfigurieren von Anwendungsendgeräten in einem Heimnetz, **dadurch gekennzeichnet, dass** es Folgendes umfasst:
Austauschen von Informationen durch ein Anwendungsendgerät mit einem Heim-Gateway, um Adresseninformationen eines Servers für automatische Gateway-Konfiguration (GACS) zu erhalten, und Senden durch das Anwendungsendgerät einer Konfigurationsanforderungsnachricht zu dem GACS (33); und
Erhalten durch das Anwendungsendgerät zurückgeleiteter Adresseninformationen eines Servers für automatische Endgerätkonfiguration (TACS) von dem GACS (35), Senden durch das Anwendungsendgerät der Konfigurationsanforderungsnachricht zu dem TACS in Übereinstimmung mit den erhaltenen Adresseninformationen des TACS (36) und Erhalten durch das Anwendungsendgerät von Konfigurationsinformationen von dem TACS für eine automatische Konfiguration (37).

7. Verfahren nach Anspruch 6, wobei der Prozess des Austauschens von Informationen mit dem Heim-Gateway, um die Adresseninformationen des GACS zu erhalten, Folgendes umfasst:
Senden durch das Anwendungsendgerät einer Anforderungsnachricht für dynamisches Host-Konfigurationsprotokoll (DHCP-Anforderungsnachricht) oder einer DHCP-Informationsnachricht zu dem Heim-Gateway (31); und
Senden durch das Heim-Gateway von Adresseninformationen des GACS zu dem Anwendungsendgerät mittels einer DHCP ACK-Nachricht, nachdem die DHCP-Anforderungsnachricht oder die DHCP-Informationsnachricht (32) empfangen worden ist.

8. Verfahren nach Anspruch 6, das vor dem Erhalten der zurückgeleiteten Adresseninformationen des TACS von dem GACS ferner Folgendes umfasst:
nach dem Empfangen der Konfigurationsanforderungsnachricht Abfragen von Adresseninformationen des TACS (34) durch den Server für automatische Gateway-Konfiguration und Senden der Adresseninformationen des TACS zu dem Anwendungsendgerät (35).

9. Verfahren nach Anspruch 8, das nach dem Empfangen der Konfigurationsanforderungsnachricht, dem Abfragen von Adresseninformationen des TACS durch den Server für automatische Gateway-Konfiguration und dem Senden der Adresseninformationen des TACS zu dem Anwendungsendgerät ferner Folgendes umfasst:
durch den GACS Abfragen einer lokal gespeicherten Tabelle oder eines Geschäftsunterstützungssystems oder Betriebsunterstützungssystems (BSS/OSS) nach Adresseninformationen des TACS in Übereinstimmung mit Vorrichtungsidentifizierungsinformationen, die in der von dem Anwendungsendgerät gesendeten Konfigurationsanforderungsnachricht geführt werden, und Senden der Adresseninformationen des TACS zu dem Anwendungsendgerät mittels einer Konfigurationsantwortnachricht.

## Revendications

1. Système de configuration automatique de terminaux d'application dans un réseau de rattachement, **caractérisé en ce qu'**il comprend un terminal d'application, une passerelle de rattachement, et un Serveur de Configuration Automatique de Passerelle (GACS), dans lequel :
le terminal d'application est adapté pour : obtenir des informations d'adresse du GACS par le biais de la passerelle de rattachement, envoyer un message de requête de configuration au GACS, obtenir des informations d'adresse d'un Serveur de Configuration Automatique de Terminal (TACS), envoyer le message de requête de configuration au TACS, et obtenir des informations de configuration depuis le TACS pour la configuration automatique ;
la passerelle de rattachement est adaptée pour : recevoir un message de Requête selon le Protocole de Configuration Dynamique Hôte (DHCP) ou un message d'Information DHCP envoyé depuis le terminal d'application et envoyer les informations d'adresse du GACS au terminal d'application par le biais d'un message DHCP ACK ; et
le GACS est adapté pour : recevoir le message de requête de configuration envoyé par le terminal d'application, obtenir les informations d'adresse du TACS en fonction du message de requête de configuration, et envoyer les informations d'adresse obtenues du TACS au terminal d'application.

2. Système selon la revendication 1, comprenant en outre :
le TACS, adapté pour : recevoir le message de requête de configuration envoyé par le terminal d'application et configurer le terminal d'application.

3. Système selon la revendication 1, dans lequel le terminal d'application comprend :
un module client DHCP, adapté pour obtenir une adresse IP d'un serveur DHCP à partir d'un réseau selon le DHCP et analyser syntaxiquement les informations d'adresse du GACS provenant du message DHCP ACK envoyé par la passerelle de rattachement.

4. Système selon la revendication 1, dans lequel le GACS comprend en outre :
un module de réception d'informations, adapté pour recevoir le message de requête de configuration envoyé par le terminal d'application, le message de requête de configuration comportant des informations d'identifiants de dispositifs ;
un module d'interrogation d'informations, adapté pour : interroger une table mémorisée localement ou un Système de Support d'Affaires ou Système de Support d'Opérations (BSS/OSS) à la recherche d'informations TACS pertinentes en fonction des informations d'identifiants de dispositifs incluses dans le message de requête de configuration ; et
un module d'envoi d'informations, adapté pour : obtenir les informations d'adresse du TACS depuis le module d'interrogation d'informations et envoyer les informations d'adresse au terminal d'application par le biais d'un message de réponse de configuration.

5. Système selon l'une quelconque des revendications 1 à 4, dans lequel :
le message de requête de configuration est le message Information du DHCP comportant un événement AMORÇAGE ; et
le message de réponse de configuration est un message DHCP ACK et le message DHCP ACK est un message de Réglage de Valeurs Paramétriques.

6. Procédé de configuration automatique de terminaux d'application dans un réseau de rattachement, **caractérisé en ce qu'**il comprend :
l'échange d'informations par un terminal d'application avec une passerelle de rattachement afin d'obtenir des informations d'adresse d'un Serveur de Configuration Automatique de Passerelle (GACS) et l'envoi par le terminal d'application d'un message de requête de configuration au GACS (33) ; et
l'obtention par le terminal d'application d'informations d'adresse renvoyées d'un Serveur de Configuration Automatique de Terminal (TACS) depuis le GACS (35), l'envoi par le terminal d'application du message de requête de configuration au TACS en fonction des informations d'adresse obtenues du TACS (36), et l'obtention par le terminal d'application d'informations de configuration depuis le TACS pour la configuration automatique (37).

7. Procédé selon la revendication 6, dans lequel le processus d'échange d'informations avec la passerelle de rattachement pour obtenir les informations d'adresse du GACS comprend :
l'envoi, par le terminal d'application, d'un message de Requête selon le Protocole de Configuration Dynamique Hôte (DHCP) ou d'un message Information du DHCP à la passerelle de rattachement (31) ; et
l'envoi, par la passerelle de rattachement, d'informations d'adresse du GACS au terminal d'application par le biais d'un message DHCP ACK après la réception du message de Requête du DHCP ou du message Information du DHCP (32).

8. Procédé selon la revendication 6, comprenant en outre avant l'obtention des informations d'adresse renvoyées du TACS depuis le GACS :
après la réception du message de requête de configuration, l'interrogation par le serveur de configuration automatique de passerelle à la recherche d'informations d'adresse du TACS (34) et l'envoi des informations d'adresse du TACS au terminal d'application (35).

9. Procédé selon la revendication 8, comprenant en outre, après la réception du message de requête de configuration, l'interrogation par le serveur de configuration automatique de passerelle à la recherche d'informations d'adresse du TACS, et l'envoi des informations d'adresse du TACS au terminal d'application :
par le GACS, l'interrogation d'une table mémorisée localement ou d'un Système de Support d'Affaires ou Système de Support d'Opérations (BSS/OSS) à la recherche d'informations TACS en fonction des informations d'identifiants de dispositifs incluses dans le message de requête de configuration envoyées par le terminal d'application, et l'envoi des informations d'adresse du TACS au terminal d'application par le biais d'un message de réponse de configuration.
